# DEMANDE DE BREVET EUROPEEN

(11) **EP 1 983 722 A2**
(43) Date de publication de la demande: **22.10.2008**
(21) Numéro de dépôt: 08290309.7
(22) Date de dépôt: 31.03.2008
(51) Int. Cl.: H04L 29/06

(54) **Procédé et système de sécurisation d'accès internet de téléphone mobile, téléphone mobile et terminal correspondants**

(30) Priorité: 19.04.2007 FR 0754578
(71) Demandeur: Bouygues Telecom, 92100 Boulogne Billancourt (FR)
(72) Inventeur: Smierzchalski, Stéphane, 75014 Paris (FR); Chauvignee, Franck, 27120 Menilles (FR)
(74) Mandataire: Bredema

(57) **Abrégé**

Afin d'accéder à Internet, les cartes SIM des téléphones mobiles contiennent un code d'identification. Cependant, ces cartes peuvent être retirées du téléphone mobile pour lesquels elles sont normalement prévues, afin d'être insérées dans d'autres téléphones mobiles, dans des smartphones ou sur la carte PCMCIA d'un ordinateur PC.

L'invention vise à sécuriser l'accès à Internet à ces téléphones mobiles. Pour ce faire, un code particulier (K) est implémenté sur la mémoire (100) du téléphone mobile (1). Un navigateur Internet permet alors de communiquer à la passerelle Internet (3) de son opérateur réseau ce code modèle après avoir été chiffré. Le chiffrage fournit des informations dynamiques propres à chaque demande de connexion. Chaque requête adressée à un fournisseur de contenu (15) contient dans son en-tête le code modèle chiffré. La passerelle (3) déchiffre ce code modèle, pour vérifier s'il est reconnu, et informe les fournisseurs de contenu (15) sollicités par la requête si le terminal est autorisé ou inconnu. Le navigateur Internet particulier peut aussi servir à indiquer à la passerelle (3) quel est le type de navigation souhaité par le terminal, simple ou complet (full-browsing), ceci à des fins de tarification différenciée.

## Description

L'invention concerne un procédé et un système de sécurisation de la connexion Internet des téléphones d'un opérateur mobile pour la consultation des services et de la messagerie électronique. Elle concerne également les téléphones mobiles, ainsi que les terminaux de vidéo à la demande mettant en oeuvre ce procédé.

Dans la situation actuelle, les cartes SIM équipant les téléphones mobiles permettent à l'utilisateur de téléphone mobile de naviguer sur Internet via le ou les réseaux de l'opérateur mobile dont il est abonné. Pour ce faire, les sites Internet ont une ergonomie et des contenus développés en fonction des différentes technologies de navigation du téléphone mobile sur le réseau Internet (navigateurs tels que par exemple i-mode®, WAP, Full-Browsing (navigation complète),...).

Un problème se pose néanmoins sur l'identification du matériel utilisé pour la connexion. Cette identification du matériel est la seule garantie de la délivrance du bon contenu au bon mobile (contenu adapté au matériel, niveau de sécurisation du contenu adéquat en fonction du matériel).

Un premier niveau de sécurité existant consiste à vérifier que l'autorisation d'accès est contractuellement liée à la carte SIM du téléphone, et permet ainsi d'ouvrir les points d'accès au réseau de l'opérateur autorisés par le contrat.

De plus, afin d'identifier le téléphone mobile par un « nom » auprès de son opérateur de téléphonie mobile, un paramètre du navigateur est implanté sur le téléphone, le « User-Agent », qui permet d'identifier le modèle du téléphone qui demande une connexion à Internet. Cette identification peut être vérifiée par filtrage sur la passerelle d'accès au réseau de l'opérateur.

Par ailleurs, sur certaines catégories de téléphones, il est possible de refuser certaines connexions si le téléphone est utilisé en tant que modem. Cela permet de limiter, sur ces téléphones, l'accès à certains points d'accès de l'opérateur aux seules applications du téléphone.

Afin de limiter l'accès aux réseaux aux navigateurs autorisés, le document de brevet US 20040059937 propose de réduire l'accès à un contenu d'un serveur central à un nombre limité de navigateurs identifiés par un identifiant transmis dans une requête.

Dans le document de brevet WO 2006106270 il est proposé de stocker les droits d'utilisation dans la carte SIM du mobile. Le mobile génère des clés de chiffrage/déchiffrage pour transférer au mobile un contenu multimédia ainsi protégé.

D'autres techniques font intervenir une architecture propre à une authentification. Par exemple, le document WO 2005041608 utilise un serveur dédié à l'authentification par signature électronique.

Le problème existant dans l'état actuel de la technique résulte du fait que les cartes SIM peuvent être retirées du téléphone mobile pour lesquelles elles sont normalement prévues, afin d'être insérées dans d'autres téléphones mobiles, dans des smartphones ou sur la carte PCMCIA d'un ordinateur PC.

S'agissant de l'identification du type « User-Agent », le « nom » peut être changé sur la plupart des navigateurs PC ou smartphones, en empruntant le « nom » d'un autre navigateur du réseau (ces noms étant excessivement simples et aisément disponibles).

Quant à la restriction de certains points d'accès de l'opérateur lors de l'utilisation du téléphone en tant que modem, seuls certains mobiles effectuent cette vérification. La majorité des mobiles n'effectuant pas ce contrôle, il est aisé d'utiliser un point d'accès de l'opérateur réservé aux seuls téléphones en substituant, au mobile effectuant ce contrôle d'usage modem, un mobile ne l'effectuant pas pour connecter un ordinateur via un téléphone.

Ainsi, lors d'une connexion à Internet, l'opérateur mobile n'a aucun moyen de différencier de façon certaine, depuis son réseau, un téléphone d'un de ses abonnés, d'un ordinateur, d'un autre téléphone ou d'un smartphone. Des informations fournies par ces connexions Internet peuvent donc être communiquées à d'autres utilisateurs ou matériels que les clients de l'opérateur mobile utilisant le matériel identifié par l'application d'identification. En effet, l'identification d'un ordinateur ou d'un autre téléphone peut facilement être remplacée par une identification reconnue comme étant celle d'un client de l'opérateur mobile autorisé à naviguer sur Internet.

Les mesures de sécurité existantes ne permettent donc pas à l'opérateur de téléphonie mobile de vérifier l'identité de l'utilisateur de la connexion Internet : elles portent en effet sur l'identification par l'opérateur de la carte SIM, ou d'une application de type « User-Agent » implantée sur le téléphone. Ainsi, lorsque les User-Agents sont identiques, il est impossible de distinguer les navigateurs « Full-Browsing », des navigateurs i-mode® ou WAP, et donc de différencier la tarification, adapter le contenu ou en augmenter la sécurité.

La présente invention vise à résoudre ce problème d'identification de ses clients par un opérateur de téléphonie mobile, grâce à un moyen permettant d'identifier le téléphone mobile lui-même, et non la carte SIM.

Plus précisément, l'invention a pour objet un procédé de sécurisation de connexion Internet d'un téléphone mobile par une passerelle du réseau d'un opérateur, dans lequel un code modèle d'identification mémorisé dans le téléphone lui-même est chiffré, transmis en-tête de chaque requête de connexion, identifié par déchiffrage et validé sur la passerelle d'accès à Internet.

Selon des modes de réalisation particuliers :
- le code modèle mémorisé est propre à une série, à un modèle ou à un lot de téléphones mobiles ;
- le chiffrage consiste à chiffrer le code modèle par des informations dynamiques qui caractérisent la communication en cours, comme la date et l'heure, l'adresse IP du mobile, l'adresse IP de la passerelle, l'identification du point d'accès réseau de l'opérateur (APN) que le téléphone mobile tente d'atteindre, le nom du mobile et/ou la taille de la requête. Le code modèle obtenu étant variable dans le temps, il sera d'autant plus difficile à décrypter en cas d'interception ;
- la passerelle déchiffre le code modèle transmis par le téléphone, et vérifie sa validité par filtrage. Suite à cette vérification, si le code modèle est connu, le mobile est alors déclaré comme « terminal autorisé ». La passerelle définit alors son profil d'utilisation des services Internet selon le mode de navigation autorisé par interrogation de sa base de données ;
- le résultat du filtrage, qui permet de distinguer entre les mobiles autorisés et les non autorisés, et le profil d'utilisation remplacent le code modèle dans une indication transmise aux fournisseurs de contenu :
- si le code est connu, le mobile est déclaré comme terminal autorisé auprès de ces fournisseurs et si le code est inconnu ou considéré par la base de données comme incertain, par exemple dans le cas de code modèles rendus publics, détourné (lorsque le code modèle modem est repéré), incompatible ou indisponible (pour les anciens mobiles), le téléphone mobile est déclaré comme terminal « inconnu », « incertain », « détourné » ou « indisponible » aux fournisseurs de contenu d'Internet ;
- la connexion Internet d'un « terminal inconnu » permet aux fournisseurs de contenu d'Internet d'adapter le contenu de leur livraison d'information en fonction du profil du terminal (connu ou inconnu) déterminé par la passerelle ;
- le mode de navigation sur Internet demandé est fourni à l'opérateur à des fins de tarification : cette tarification pourra en effet être différente selon le navigateur souhaité : technologie restreinte (par exemple : i-mode® ou WAP) ou technologie plus élaborée (par exemple full-browsing).

L'invention se rapporte également à un système de sécurisation d'accès Internet de téléphone mobile de mise en oeuvre du procédé précédent, ce téléphone ayant un module de gestion de données numériques (DRM). Ce système comporte, intégrée au DRM, une application de chiffrage du code modèle mémorisé, cette application étant implémentée à chaque transmission de requête sur une application de déchiffrage implantée sur la passerelle d'accès au réseau Internet.

Selon des modes de réalisation particuliers :
- l'application de chiffrage est implantée dans une mémoire du téléphone mobile, une mémoire de compression ou de décompression de données transmises ou reçues ;
- l'application de déchiffrage vérifie également la conformité du code modèle au regard de sa base de données et interprète cette conformité afin de transmettre un message aux fournisseurs de contenus sur le profil client du téléphone mobile, notamment choisi entre mobile autorisé, incompatible, inconnu et détourné ;
- une option « full-browsing » équipe les téléphones afin de distinguer les types de navigation et de procéder à la tarification correspondante ; lorsque le navigateur sélectionne cette option, elle est communiquée à l'opérateur par l'application de chiffrage du téléphone mobile.

D'autres caractéristiques et avantages de l'invention ressortiront à la lecture qui suit d'un exemple de réalisation non limitatif, en référence aux dessins annexés qui représentent, respectivement :
- la figure 1, une vue schématique d'une connexion d'un téléphone mobile au réseau Internet via le réseau de son opérateur mobile dans le cadre sécurisé de l'invention; et
- la figure 2, un module non autorisé cherchant à se connecter à Internet via une carte SIM dans le cadre sécurisé selon l'invention.

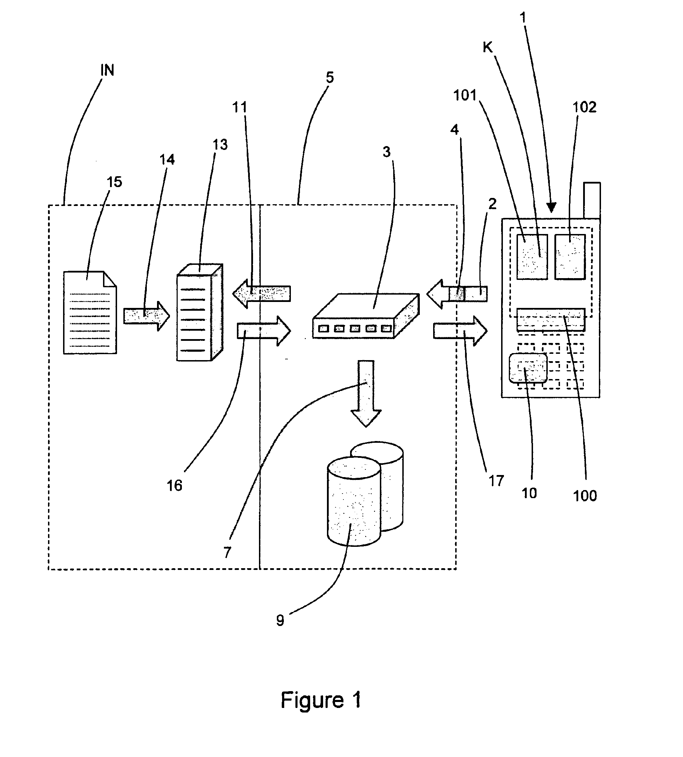

En référence à la figure 1, le téléphone mobile 1 illustré est équipé notamment d'une carte SIM 10 permettant l'accès à Internet, d'un module numérique 100, en abrégé DRM, de gestion de l'émission/réception des données par paquets, de modules de mémorisation/décompression de données 101 et de compression/mémorisation de données 102. Un code modèle K d'identification du modèle de téléphone est mémorisé dans la mémoire de décompression de données 101 du mobile. Lors de la préparation de l'émission d'une requête 2 d'accès au réseau Internet IN, un chiffrage du code modèle est opéré par une application de DRM implantée dans le module numérique de gestion 100 du mobile. Ce module de gestion porte en en-tête de la requête le code modèle ainsi chiffré pour former une signature d'identification de ce mobile. Dans le cas présenté, l'opérateur du mobile offre les services Internet par le navigateur, la passerelle vers ces services est appelée Proxy et l'application du DRM correspondante est appelée Proxy DRM.

Dans cet exemple de réalisation, l'en-tête est formé d'une séquence composée des adresses IP du mobile et de la passerelle Proxy au réseau de l'opérateur, la date et l'heure d'émission de la requête, ainsi que l'adresse IP du point d'accès réseau (connu sous l'appellation APN) et le code modèle d'identification du mobile.

La requête 2 munie de sa signature en en-tête est alors transmise à la passerelle de réseau Proxy 3 de son opérateur après passage par le point d'accès PNA 4 au réseau 5 de l'opérateur.

La passerelle 3 déchiffre l'en-tête puis filtre l'accès en vérifiant que le code modèle est valide pour le navigateur utilisé et les services demandés. Ce filtre est réalisé par une interrogation (flèche 7) à sa base de données 9. Si la réponse est positive, comme dans cet exemple, la passerelle 3 envoie un message 11 au serveur Internet 13 visé par la requête. Ce message contient l'information «terminal autorisé » dans cet exemple, ainsi que la demande de téléchargement de données au fournisseur de contenu 15. Les données du fournisseur 15 sont alors rapatriées en suivant le trajet inverse via la liaison 14 jusqu'au serveur 13, la liaison 16 jusqu'à la passerelle 3, puis la liaison 17 jusqu'au téléphone mobile 1. Les données sont enfin mémorisées après compression dans le module 102.

Selon le résultat de la comparaison entre le code modèle du mobile et ceux de la base de données 9 de la passerelle 3, un message approprié au profil du mobile est transmis aux serveurs Internet. Avantageusement, un paramètre de profil permet ou pas d'activer la fonction de filtrage. Les opérateurs ne disposant pas de passerelle compatible pourront désactiver le filtre. Le navigateur, qui apparaît comme mobile inconnu (voir ci-après) pourra aussi le faire.

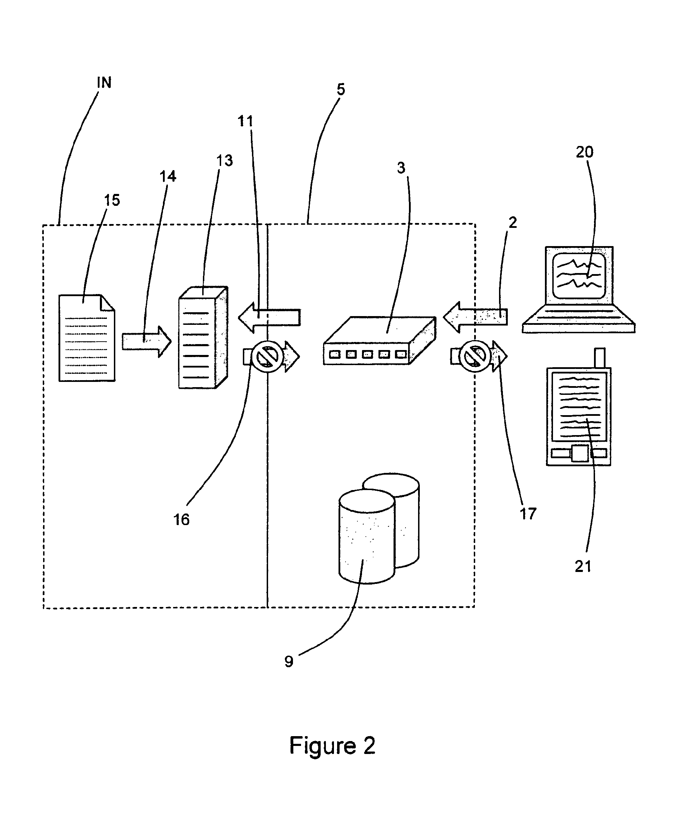

Le message contient une information conforme à cette comparaison : « terminal sécurisé » comme dans l'exemple ci-dessus, « terminal inconnu » si le code est incertain, incomplet ou indisponible, « terminal détourné » si un code de type modem est repéré, ou encore « terminal incompatible » pour les mobiles de génération antérieure. Les serveurs qui reçoivent des messages autres que « terminal autorisé » peuvent verrouiller l'accès au fournisseur de données, lancer une surfacturation ou transmettre un message de retour. Un exemple de traitement est présenté ci-après en référence à la figure 2.

Sur la figure 2, un ordinateur PC 20 ou un smartphone 21 dépourvu de l'application de chiffrage, qui utilise une carte SIM pour sa connexion Internet, envoie à la passerelle Proxy 3 une requête2 de connexion à Internet. Il s'identifie via les informations contenues dans la carte SIM via un « user-agent».

Mais la passerelle Proxy 3 ne détecte pas de code modèle et la consultation de la base de données 9 n'est alors pas consultée dans cet exemple. Alternativement, la passerelle peut consulter en option sa base de données afin de finaliser éventuellement le profil du requérant et transmettre un message plus précis au serveur Internet.

Dans l'exemple illustré, un message envoyé par la passerelle au serveur Internet 13 visé par la requête contient l'information « terminal inconnu », ainsi qu'une demande de téléchargement de données du fournisseur de contenu 15 sous réserve d'accord. Dans le cas présenté, le serveur Internet 13 choisit de ne pas transférer les informations demandées aux terminaux 20 ou 21. Le serveur Internet 13 envoie alors un message de refus 16 qui est relayé par la passerelle Proxy 3 et la liaison 17 jusqu'aux terminaux 20 ou 21.

L'invention n'est pas limitée aux seuls cas des téléphones mobiles. Elle peut également s'appliquer aux opérateurs mobiles et aux câblo-opérateurs dont les clients achètent du temps d'image, films ou émissions de télévision, appelé généralement « vidéo à la demande » (ou VOD), les terminaux des clients, des ordinateurs, des décodeurs ou des postes de télévision, ont alors le même système d'identification selon l'invention que ceux des téléphones mobiles.

## Revendications

1. Procédé de sécurisation de connexion Internet d'un téléphone mobile par une passerelle du réseau d'un opérateur, **caractérisé en ce qu'**un code modèle (K) d'identification mémorisé dans le téléphone (1) lui-même est chiffré, transmis en-tête de chaque requête de connexion, identifié par déchiffrage et validé sur la passerelle (3) d'accès à Internet.

2. Procédé de sécurisation selon la revendication 1, **caractérisé en ce que** le code modèle mémorisé est propre à une série, à un modèle ou à un lot de téléphones mobiles.

3. Procédé de sécurisation selon la revendication 1 ou 2, **caractérisé en ce que** le chiffrage consiste à chiffrer le code modèle par des informations dynamiques qui caractérisent la communication en cours.

4. Procédé de sécurisation selon la revendication précédente, **caractérisé en ce que** les informations dynamiques de chiffrage sont prises parmi la date et l'heure, l'adresse IP du mobile, l'adresse IP de la passerelle, l'identification du point d'accès réseau de l'opérateur, le nom du mobile et la taille de la requête.

5. Procédé de sécurisation selon l'une quelconque des revendications précédentes, **caractérisé en ce que** la passerelle (3) déchiffre le code modèle transmis par le téléphone (1), vérifie sa validité par filtrage puis, si le mobile est autorisé, définit son profil d'utilisation des services Internet selon le mode de navigation autorisé par interrogation de sa base de données (9).

6. Procédé de sécurisation selon la revendication précédente, **caractérisé en ce que** le filtrage, qui consiste à distinguer entre les mobiles autorisés et non autorisés, et le profil d'utilisation remplacent le code modèle dans une indication transmise aux fournisseurs de contenu (15).

7. Procédé de sécurisation selon la revendication précédente, **caractérisé en ce que** si le code modèle est connu, le mobile (1) est alors déclaré comme « terminal autorisé » auprès de ces fournisseurs (15) et si le code est inconnu ou considéré par la base de données comme incertain, détourné ou incompatible, le téléphone mobile est déclaré comme terminal inconnu, incertain, détourné ou incompatible aux fournisseurs de contenu d'Internet.

8. Procédé de sécurisation selon la revendication précédente, **caractérisé en ce que** la connexion Internet d'un « terminal inconnu » permet aux fournisseurs de contenu d'Internet (15) d'adapter le contenu de leur livraison d'information en fonction du profil du terminal déterminé par la passerelle (3).

9. Procédé de sécurisation selon la revendication précédente, **caractérisé en ce que** le mode de navigation sur Internet demandé est fourni à l'opérateur à des fins de tarification selon le mode de navigation souhaité ou autorisé.

10. Système de sécurisation d'accès Internet de téléphone mobile de mise en oeuvre du procédé selon l'une quelconque des revendications précédentes, ce téléphone (1) ayant un module de gestion de données DRM (100), **caractérisé en ce qu'**il comporte, intégrée au DRM, une application de chiffrage du code modèle mémorisé (K), cette application étant implémentée à chaque transmission de requête sur une application de déchiffrage implantée sur la passerelle d'accès (3) au réseau Internet (IN).

11. Système de sécurisation selon la revendication précédente, **caractérisé en ce que** l'application de chiffrage est implantée dans une mémoire du téléphone mobile, une mémoire de compression (101) ou de décompression (102) de données transmises ou reçues.

12. Système de sécurisation selon la revendication précédente, **caractérisé en ce que** l'application de déchiffrage vérifie également la conformité du code modèle (K) au regard de sa base de données et interprète cette conformité afin de transmettre un message aux fournisseurs de contenus sur le profil client du téléphone mobile, notamment choisi entre mobile autorisé, incompatible, inconnu et détourné.

13. Système de sécurisation selon l'une quelconque des revendications 10 à 12, **caractérisé en ce qu'**une option « full-browsing » équipe les téléphones (1) afin de distinguer les types de navigation et de procéder à la tarification correspondante, et **en ce qu'**en cas d'utilisation, cette option est communiquée à l'opérateur par l'application de chiffrage du téléphone mobile.

14. Téléphone mobile, **caractérisé en ce qu'**un code modèle (K) est mémorisé et chiffré dans ce téléphone, et **en ce qu'**il est équipé d'un navigateur permettant d'envoyer à la passerelle (3) d'accès au réseau Internet (IN) selon l'une quelconque des revendications précédentes.

15. Terminal de vidéo à la demande (VOD) équipé d'un navigateur et d'une mémoire intégrant un code modèle pouvant être chiffré et transmis à la passerelle (3) d'accès au réseau Internet (IN) selon l'une quelconque des revendications 1 à 14.
